# EUROPEAN PATENT APPLICATION

(11) **EP 0 699 386 A1**
(43) Date of publication of application: **06.03.1996**
(21) Application number: 95202387.7
(22) Date of filing: 04.09.1995
(51) Int. Cl.: A01K 3/00, E04H 17/10

(54) **Electric fence for demarcating and securing a site**

(30) Priority: 02.09.1994 NL 9401438
(71) Applicant: Veldman & Dijkstra B.V., NL-9774 TH Adorp (NL)
(72) Inventor: Veldman, Jan Anne, NL-9771 BC Sauwerd (NL)
(74) Representative: de Bruijn, Leendert C.

(57) **Abstract**

Electric fence for demarcating and securing a site (1), comprising fencing posts (2) fixed immovably and essentially vertically at intervals on the site, and electrically conducting fencing wires (3) running essentially horizontally between the fencing posts (2). A supply unit (V) for the supply of an electrical voltage to the fencing wires (3) is coupled to the fencing wires (3). The fencing posts (2) are provided with support points (4) for supporting the fencing wires (3) in an electrically insulating manner. Electrically insulating bars (5), fixed immovably and essentially vertically, are present between the fencing posts (2). These bars (5) are provided with support points which can be slid along them, for the fencing wires (3).

## Description

The invention relates to an electric fence for demarcating and securing a site, comprising fencing posts fixed immovably and essentially vertically at intervals on the site, electrically conducting fencing wires running essentially horizontally between the fencing posts, and a supply unit coupled to the fencing wires, for the supply of an electrical voltage to the fencing wires, while the fencing posts are provided with support points for supporting the fencing wires in an electrically insulating manner. It is clear that fencing wires can be understood as also including other conducting fencing means, such as fencing strips.

Such a fence is known from Dutch Patent Application 7713299, which has been laid open for inspection.

Each fencing post of the known fence consists of a hardwood post which can be driven into the ground, following which electrically conducting fencing wires can be placed between the fencing posts by means of support points on the fencing posts. Since the hardwood posts have good electrical insulating properties, the support points themselves need not be electrically insulating in order to keep the fencing wires electrically separated.

However, if the fencing posts are made of an electrically or more or less electrically conducting material, or if a high electrical voltage is used between the fencing wires, it is preferable to make the support points themselves electrically insulating, in order to insulate the fencing wires electrically from each other and relative to earth, particularly during damp weather and rain. An insulator for supporting the fencing wires on posts is known from German Patent Application DE 35 21 453 A1, which has been laid open for inspection.

The electric fence supply system known from US Patent Specification 4,859,868 can be used as the supply unit coupled to the fencing wires.

The supply unit can also be provided with an alarm unit, which sets off an alarm when a person comes into contact with one of the fencing wires of the fence. However, the electric fences with security device known until know have the disadvantage that the alarm makes the fence itself very expensive.

The object of the invention is to provide an electric fence of the type mentioned in the preamble which is simpler and less expensive than the known fence and is also not very susceptible to faults, and which is as free from false alarm as possible, while the number of parts can be kept to the minimum.

This object is achieved according to the invention through the fact that electrically insulating bars, fixed immovably and essentially vertically, are present between the fencing posts, and in that the bars are provided with support points which can be slid along them, for the fencing wires.

Apart from the features aimed at above, the invention has the advantage that the fencing wires do not have to be stretched so greatly. Nevertheless, the most well-defined distance possible between the fencing wires is achieved, and when there is undesirable tampering with the wires this is conducted well in the vertical plane, so that there is greater certainty of the alarm being set off.

The slidable support points can make contact with each other or with earthed fixed points on the appropriate bar when there is tampering with the fencing wires.

A very simple embodiment is obtained through the support points being formed by cylindrical support elements, the internal diameter of which is slightly greater than the external diameter of the insulating bars, and which are provided with a projection for gripping and supporting the electrically conducting fencing wires.

The support elements and the projections thereof are preferably of electrically conducting material, and the projections extend from one end of the support elements at a distance from and parallel to the axis of the support elements, which distance is greater than the inner radius of the support element.

When a potential intruder pulls two adjacent fencing wires apart in an insulating manner for the purpose of gaining access through the fence to the site being protected, these wires which have been pulled apart will close the circuit with the support elements of the fencing wires running above or below them by way of the support elements which have been slid along. The conducting support elements work advantageously and accurately as contacts of a switch, so that a reliable detection is obtained. Another advantage achieved is that the distance between the fencing wires can be increased. The support elements are preferably provided with a second, corresponding projection at the other end.

Particularly simple and cheap embodiments of the fence are described in the remaining subclaims.

The invention will be explained in greater detail below with reference to the drawings, in which:
Fig. 1 shows a part of a fence according to the invention; and
Fig. 2 illustrates a preferred embodiment of a support element according to the invention.

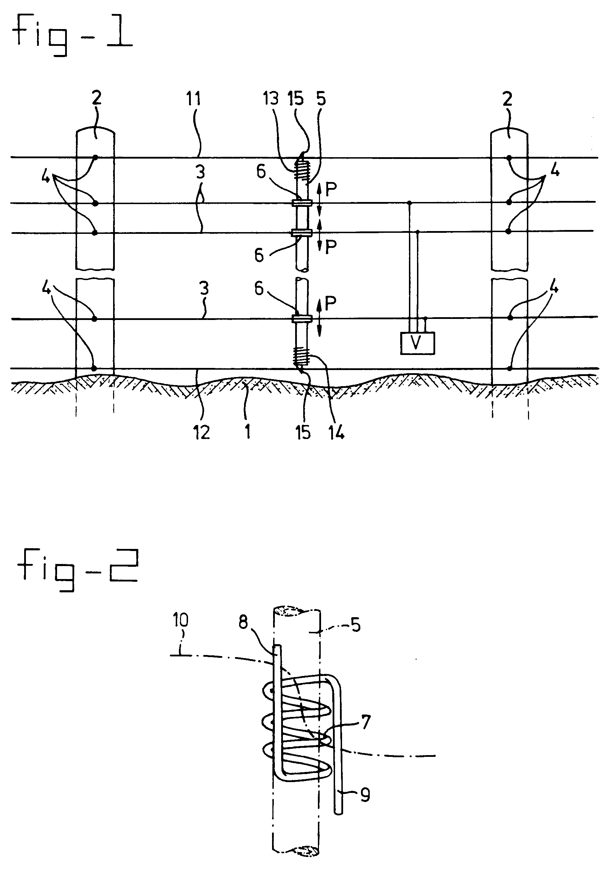

The electric fence according to the invention for demarcating and securing a site 1 consists of a large number of fencing posts 2 which are erected at intervals on the site 1. These fencing posts 2, only two of which are shown in Fig. 1, are driven into the ground of the site to a certain depth, so that they stand firm and are essentially vertical. These fencing posts 2 are preferably made of metal, in particular when a permanent fence is desired and efforts are being made to avoid using hardwood. The electric fence also consists of a number of electrically conducting fencing wires 3 or fencing strips which are stretched above one another between the fencing posts 2. These fencing wires 3 run essentially horizontally and are supported by the fencing posts 2, which to this end are provided with support points 4. The support points are shown diagrammatically in Fig. 1. If, for example, the fencing posts 2 are made of wood, the support points can be simple staples, but in the preferred embodiment of the fence, in which the fencing posts 2 are, for example, made of metal, the support points support the fencing wires 3 in an electrically insulating manner. For this purpose, commercially available insulators can be used. Wire stretchers can be used for stretching the fencing wires 3, which wire stretchers are not shown in Fig. 1, since they are commercially available in the form of, for example, wire stretchers which are adjustable by means of a screw thread and/or adjustable springs inserted between them in a fencing wire.

The fencing wires 3 are also connected to a supply unit V. Such supply units are also commercially available, and they can also be provided with alarm devices for switching on an alarm when a person comes into contact with the fencing wires or an intruder in some way or other causes a closure of the circuit between the individual fencing wires or with earth. Such supply units and the abovementioned insulators can be supplied by Gallagher Electronics.

Other fencing parts which Gallagher Electronics can supply include an intermediate metal post on which metal rings or eyes are immovably fixed in a vertical position at intervals. The fencing wires 3 then run through the annular eyes, so that if there is tampering with the fencing wires, these wires will close the circuit with the metal rings, thus activating the alarm unit. The sole function of the eyes is alarm detection. The disadvantage of the eyes is that the fencing wires 3 have to be stretched very tautly, for example with a tension of 150 kg, otherwise a false alarm can occur too easily through undesirable closure of the circuit with the eyes.

However, according to the invention, electrically insulating bars 5, which can be supported (in a manner not shown) in a vertical position by the ground 1, for example by driving said bars a certain distance into the ground, are used between the fencing posts 2. A support which is preferably used for the bar 5 is shown in Fig. 1. The bar hangs, as it were, between the top and bottom fencing wires 11 and 12 respectively, which are stretched in an essentially horizontal position by means of the support points 4 provided for that purpose. The bar 5 is provided at both ends with a fixing element 13, 14 respectively for fixing the wires 11 and 12 to the bar 5. Compared with the support of the bar 5 when it is driven into the ground, the solution shown in Fig. 1 has the advantage that the support of the bar is independent of the ground, so that moles or other creatures cannot burrow underneath it.

The top fencing wire 11 or both the top and the bottom fencing wires 11 and 12 preferably have the same potential as the adjacent fencing wire 3, so that falling branches or small creatures cannot set off a false alarm.

The fixing elements 13 and 14 shown in Fig. 1 consist of a coiled wire having thereon an eye 15 through which the fencing wires 11, 12 respectively are drawn. This fixing element is simple and cheap to produce.

These insulating bars are provided with support points 6 for the fencing wires, which support points can be slid in the lengthwise direction of the insulating bars 5 in the direction of the arrows P. Through friction between support points 6 and electrically insulating bar 5, these support points have, on the one hand, the function of a support and, on the other hand, through the pulling apart of two fencing wires 3, make it possible for these support points to be slid along the insulating bars 5, so that said fencing wires 3 can still easily close the circuit, by means of the support elements or otherwise, with the other fencing wires running above and below these fencing wires. This gives the advantage that the fencing wires can be stretched with only a slight tension of, for example, 15 kg, in which case a reliable alarm is possible, without a false alarm being able to occur. Although this is not shown, fixed points which are earthed or have a different polarity from that of the fencing wires can be provided between the support elements on the bars 5. Detection occurs through contact between support element and fixed point.

The support points 6 are preferably formed by the cylindrical support elements shown diagrammatically in Fig. 1, the internal diameter of which support elements is slightly greater than the external diameter of the insulating bars 5. These cylindrical support elements 6 are provided with means for fixing the fencing wires 3 to said support elements. These fixing means are formed by, for example, a projection (not shown) for gripping and supporting the electrically conducting fencing wires 3. The projections can be in the form of an eye which consists of, for example, a coiled wire, so that the fencing wire can easily be inserted into the inside of the eye.

The support elements 6 and the projections belonging thereto are preferably made of electrically conducting material, so that when fencing wires are pulled apart adjacent support elements close the circuit with each other. The support elements behave like contacts of a switch, so that a reliable and well-defined closure of the circuit is produced. The support elements thus act as a support and also as a detector with reliable detection function. The projections extend from one end of the support elements at a distance from and parallel to the axis of the support elements, which distance is greater than the inner radius of the support element 6.

A very simple gripping support of the electrically conducting fencing wire 3 is obtained through the support element 6 being provided with two projections. One projection runs from one end of the support element 6 at a distance from the outside of said element and parallel thereto in the direction of the other end of the support element. The second projection then runs from the other end, also at a distance from the outside of the support element, in the direction of the opposite end of the support element 6. The abovementioned distances are dimensioned in such a way that a fencing wire 3 is easy to insert between support elements 6 and the projections.

Fig. 2 shows a preferred embodiment of the support element 6 which is simple and cheap to manufacture. This support element 6 consists of a coil 7 made from a coiled rigid wire which is preferably electrically conducting.

The gripping support for the fencing wire is formed by the two projections 8 and 9 of the support element. In the case of the preferred embodiment each projection is a free end length of the coiled wire, which end length consists of a part extending from the respective end of the coil in a direction at right angles to the axis of the coil 7, and a second part connecting to the end of the first part of the projection 8 or 9, and running parallel to said axis. The first part of the projection 8, 9, running at right angles to the axis, is of such length that the second part, running parallel to the axis of the coil, runs at such a distance from the coil that a fencing wire 3 can be inserted between the coil 7 and the projection 8, 9, as shown by the dashed and dotted line 10 in Fig. 2. It can be seen from Fig. 2 that the projections 8 and 9 run in opposite directions from the respective ends.

The coil 7 with the projections 8 and 9 belonging thereto, shown in Fig. 2, can also be used for supporting the fencing wire 3 on the fencing posts 2. For this purpose, the coiled wire is resilient and the coil is wound in such a way that it has an internal diameter which is slightly smaller than the external diameter of the fencing post 2. In order to ensure that no closure of the circuit is produced between the fencing wires 3, the fencing post 2 can be made of an insulating material or can be provided with a layer of insulating material.

However, since the fencing posts 2 have to provide the strength of the fence, said posts are often made of metal. In this case an insulating bar corresponding to the bar 5, and running parallel to and at a distance from the fencing post 2, is fixed on said metal fencing post 2. The coils 7 with the projections 8 and 9 can then be fitted in a clamping manner at intervals on said insulating bar, in order to support the fencing wires 3. Of course, the abovementioned cylindrical support elements can be used with the projections belonging thereto, insofar as said elements are provided with means for fixing them tightly on an insulating bar or an insulated fencing post 2. When used on a fencing post 2, the coil-shaped support elements have the additional advantage that, through pressing the projections 8 and 9 towards each other with two fingers of one hand, these projections are easy to slide on a fencing post or the insulating bar belonging thereto, and are clamped thereon in the desired position after being released.

The use of insulating bars for both the slidable support elements and the fixed support elements on the fencing posts 2 has the advantage that these insulating bars can be fitted in a simple manner on the posts of the fencing. Another advantage here is that it does not matter if the fencing is in poor condition or is not in a completely vertical position along the length.

## Claims

1. Electric fence for demarcating and securing a site, comprising fencing posts fixed immovably and essentially vertically at intervals on the site, electrically conducting fencing wires running essentially horizontally between the fencing posts, and a supply unit coupled to the fencing wires, for the supply of an electrical voltage to the fencing wires, while the fencing posts are provided with support points for supporting the fencing wires in an electrically insulating manner, **characterized in that** electrically insulating bars, fixed immovably and essentially vertically, are present between the fencing posts, and in that the bars are provided with support points which can be slid along them, for the fencing wires.

2. Fence according to Claim 1, **characterized in that** the slidable support points can make contact with each other or with fixed earthed points on the appropriate bar.

3. Fence according to Claim 1 or 2, **characterized in that** the support points are formed by cylindrical support elements, the internal diameter of which is slightly greater than the external diameter of the insulating bars, and which are provided with a projection for gripping and supporting the electrically conducting fencing wires.

4. Fence according to Claim 3, **characterized in that** the support elements and the projections thereof are of electrically conducting material, and in that the projections extend from one end of the support elements at a distance from and parallel to the axis of the support elements, which distance is greater than the inner radius of the support element.

5. Fence according to Claim 4, **characterized in that** the support elements are provided with a second, corresponding projection at the other end, and in that the projections of a support element run in opposite directions from the respective ends thereof.

6. Fence according to one of Claims 3 - 4, **characterized in that** the cylindrical support element consists of a coil made from a coiled rigid wire.

7. Fence according to Claim 6, **characterized in that** the projection of the support element is formed by a free end length of the coiled wire, which end length consists of a part extending from the end of the coil in a direction away from the axis of the support element, and a part connecting thereto and running parallel to said axis.

8. Fence according to one of the preceding claims, **characterized in that** the insulating support points of the fencing post are formed by an insulating bar fixed on the fencing post parallel thereto and at a distance therefrom, and a number of support elements clamping around the bar at intervals, in the form of coils made from coiled resilient wire, which coil has an internal diameter which is slightly smaller than the external diameter of the insulating bar, and is provided with a projection behind which the fencing wire grips.

9. Fence according to Claim 8, **characterized in that** the projection of the support element is formed by a free end length of the coiled wire, which end length consists of a part extending from the end of the coil in a direction away from the axis of the support element, and a part connecting thereto parallel to said axis.

10. Fence according to one of the preceding claims, **characterized in that** the insulating bars with the slidable support elements and/or the bars with the fixed support elements are fixed along and at a distance from the posts of a fencing system.

11. Fence according to one of the preceding claims, **characterized in that** fixing elements for the top and bottom fencing wires respectively are fixed on the ends of the bars which are provided with the slidable support points.

12. Fence according to Claim 11, **characterized in that** the fixing element consists of a coil whose internal diameter is slightly smaller than the external diameter of the bar, and in that an end of the coil is provided with an eye.

13. Fence according to one of the preceding claims, **characterized in that** the top fencing wire or both the top and the bottom fencing wire have the same potential as the adjacent fencing wire.

14. Coil from a coiled wire suitable for an insulating bar suitable for a fence according to one of the preceding claims.

15. Coil according to Claim 14, **characterized** by a projection which consists of a free end length of the coiled wire, which end length consists of a part extending from the end of the coil in a direction away from the axis of the support element and a part connecting thereto and running parallel to said axis.

16. Coil according to Claim 15, **characterized in that** the other end of the coil is provided with a second, corresponding projection.
